# EUROPEAN PATENT APPLICATION

(11) **EP 4 815 258 A1**
(43) Date of publication of application: **30.09.2026**
(21) Application number: 26166872.7
(22) Date of filing: 23.03.2026
(51) Int. Cl.: H02J 50/40

(54) **WIRELESS POWER TRANSFER DEVICE FOR AUTOMATIC LOGISTICS SYSTEMS**

(30) Priority: 26.03.2025 KR 20250038493
(71) Applicant: Green Power Co., Ltd., Hwaseong-si, Gyeonggi-do 18487 (KR)
(72) Inventor: Cho, Jung Goo, Suwon-si, Gyeonggi-do (KR)
(74) Representative: Schön, Christoph

(57) **Abstract**

The present invention relates to a wireless power transfer device that transfers power to one or more transfer carts moving along a rail in a non-contact manner via magnetic induction. More specifically, in a wireless power transfer device including a feeder line installed along a rail and configured as a closed loop, a feeder track formed by sequentially installing a plurality of feeder line loops, an inverter connected to each feeder line, and an extension line connecting the feeder line and the inverter, in which the distance between a feeder track and the inverter is long, so the extension line is long and expensive, and a wireless power transfer device with a novel structure is provided. In the wireless power transfer device with a novel structure, an inverter is disposed on a side of a rail to eliminate the extension line, thereby reducing costs, input and output terminals of the inverter are configured to be detachable through a connection unit, so that when an inverter fails, an AS-only transfer cart removes the failed inverter, moves the failed inverter to an inverter storage, and installs a new inverter in the place of the failed inverter, thereby enabling automatic maintenance.

## Description

### [Technical field]

The present invention relates to a wireless power transfer device that transfers power to one or more transfer carts moving along a rail in a non-contact manner via magnetic induction. More particularly, in implementing a wireless power transfer device, an inverter is disposed on a side of a rail to eliminate a long extension line connecting the inverter to a feeder track, thereby reducing costs. Meanwhile, input and output terminals of the inverter are configured to be detachable through a connection unit. Accordingly, when an inverter fails, a transfer cart removes the failed inverter, moves the failed inverter to an inverter storage, and installs a new inverter in the place of the failed inverter, thereby enabling automatic maintenance.

### [Background Art]

The following description merely provides background information related to the present embodiment and does not constitute prior art.

Wireless power transfer devices that transfer power to transfer carts moving along a track in a non-contact manner have been widely used in cleanroom environments, such as semiconductors, LCDs, and manufacturing lines, due to advantages of generating no particles since there is no mechanical contact and allowing for high-speed operation.

Wireless power transfer devices include a feeder line, an inverter that supplies high-frequency current to the feeder line, a collector coil (pickup device) that extracts the induced electromotive force from the high-frequency magnetic field generated by the feeder line, a rectifier that rectifies the voltage induced in the collector coil, and, in some cases, a regulator that regulates the rectified DC voltage.

In semiconductor and display manufacturing lines, as well as battery manufacturing lines and logistics centers, the transfer carts that operate upon receiving power from wireless power transfer devices require infinite reliability, as any interruption in power supply may lead to enormous losses.

In some cases, multiple transfer carts are placed on a single feeder line, and here, if the inverter fails, all transfer carts on that feeder line inevitably stop, and thus, the inverter may be considered a component that most significantly affects the reliability of the wireless power transfer device.

To address this issue, a failover technology has been proposed, in which, when two wireless power transfer devices are installed, two independent inverters are connected to respective feeder lines to supply AC power and two feeder units (a resonance unit and a feeder line) are connected to outputs of the respective inverters through switches. In this configuration, if one of the two inverters fails, the output switch of the failed inverter is turned off, and a connection switch connecting input ends of the two feeder units is turned on to supply output of the intact inverter to both feeder units, thereby allowing a single inverter to drive both feeder units so that power may be smoothly supplied to both feeder lines.

Meanwhile, a semiconductor manufacturing line generally includes a Fab floor, an intermediate floor, and a lower floor. The Fab floor, in which various process equipment is located and actual semiconductor processes take place, is configured as a high-level cleanroom. On the Fab floor, there is an overhead hoist transfer (OHT), which is logistics equipment for carrying a front opening unified pod (FOUP) including semiconductor wafers, and rails for the OHT are installed like a spider web on the ceiling of the Fab floor. To maintain cleanliness, power is supplied to the OHT by a wireless power transfer device capable of non-contact power transfer. A wireless power transfer device for OHT includes a feeder line installed along a rail and configured in a closed loop, an inverter that supplies high-frequency current to the feeder line, and an extension line connecting the feeder line and the inverter. The OHT includes a power collecting unit that receives power through magnetic induction from the high-frequency current flowing in the feeder line, thereby receiving power for driving the OHT.

Since cleanrooms are expensive, it is difficult to dispose inverters within the cleanroom; thus, inverters are mainly disposed on the floor of the lower floor, and an extension line connected to an inverter output goes up to the ceiling of the lower floor, moves horizontally through the intermediate floor, and then goes up to the Fab floor to reach the rail through a duct. In this case, there are disadvantages in that, long expensive extension lines must be installed, incidental costs, such as cable trays, cable ducts, and installation labor costs for installing the extension lines are high. In addition, when an inverter or feeder line fails, the lower floor is not visible from the Fab floor, making after-sales service inconvenient.

To address this issue, inverters are sometimes embedded in the walls of the Fab floor. However, this still requires significant extension cables, making it an incomplete solution.

### [Disclosure]

### [Technical Problem]

The present invention has been devised to solve the aforementioned problems, and an object of the present invention is to provide a wireless power transfer device having a novel structure, in which an inverter is miniaturized and installed on a side of an OHT rail to eliminate an extension line and reduce costs, while the inverter is configured to be detachable so that when the inverter fails, an OHT moves to separate the corresponding inverter and install a new inverter, thereby enabling automated and unmanned inverter after-sales service (AS).

### [Technical Solution]

In one general aspect, a wireless power transfer device for transferring power to a plurality of transfer carts moving along a rail by magnetic induction in a non-contact manner includes: a feeder line installed along the rail and configured as a closed loop; a feeder track configured such that a plurality of feeder loops are sequentially installed along the rail; an inverter supplying AC current to each of the feeder lines; an inverter cradle provided on a side of the rail for mounting the inverter; the feeder line being connected to the inverter cradle and the inverter being mounted on the inverter cradle and a plurality of connection units connecting input and output terminals of the inverter to the inverter cradle so that the inverter is detachable; a transfer cart replacing the inverter; and a central controller remotely controlling the entire transfer cart and the entire inverter and monitoring various data, wherein, when one of the plurality of inverters fails, the central controller detects the failure and commands the transfer cart to move to a position of the failed inverter, to detach the failed inverter from the inverter cradle and move the failed inverter to an inverter storage, and to install a new inverter stored in an inverter storage onto the inverter cradle of the failed inverter and connect a connection unit, thereby automatically replacing the failed inverter with the new inverter.

### [Advantageous Effects]

Conventional wireless power transfer devices for logistics automation equipment faced issues of high cost, maintenance inconvenience, and long repair times due to the long distance and isolation between the feeder line and the inverter, which required lengthy extension lines. In contrast, in the present invention, the inverter is directly mounted on the side of the rail and enables automatic replacement of a failed inverter with a new one. This results in significant cost reduction, maintenance automation, and rapid repair, thereby effectively enhancing the overall efficiency of the logistics automation system.

### [BRIEF DESCRIPTION OF THE DRAWINGS]

FIG. 1 is a general diagram of a wireless power transfer device for logistics automation equipment.
FIG. 2 is a diagram of a semiconductor manufacturing line and the layout of the logistics automation equipment and inverter.
FIG. 3 is a diagram of an OHT, a transfer cart for transporting an FOUP in a semiconductor manufacturing line, and an STB, a storage space for the FOUP.
FIG. 4 is a diagram illustrating an inverter and a transfer cart mounted on the side of a rail according to the present invention.
FIG. 5 illustrates a configuration of a connector as an embodiment of a detachable connection unit according to the present invention.
FIG. 6 illustrates an embodiment of inverter replacement using a side arm and hoist of a transfer cart according to the present invention.
FIG. 7 illustrates an embodiment of parallel operation of multiple inverters mounted on the side of a rail according to the present invention.
FIG. 8 is a diagram illustrating a configuration of a modularized and separated inverter mounted on a side of a rail according to the present invention.
FIGS. 9 to 11 are diagrams illustrating a configuration of a transfer cart and a cradle for horizontally mounting an inverter and a method of horizontally mounting an inverter according to the present invention.

### [Best Mode]

An embodiment of the present invention will be described in detail with reference to the accompanying drawings. The following detailed description is merely an example and merely illustrates embodiments of the present invention.

A wireless power transfer device that transfers power to a plurality of transfer carts moving along a rail in a non-contact manner by magnetic induction generally includes: a feeder line installed along the rail and configured as a closed loop; a feeder track configured by sequentially connecting a plurality of feeder line loops along the rail; an inverter that supplies high-frequency current to each feeder line; an extension line connecting the feeder line and the inverter; and a power collecting unit provided on the transfer cart to collect power from the feeder track by magnetic induction.

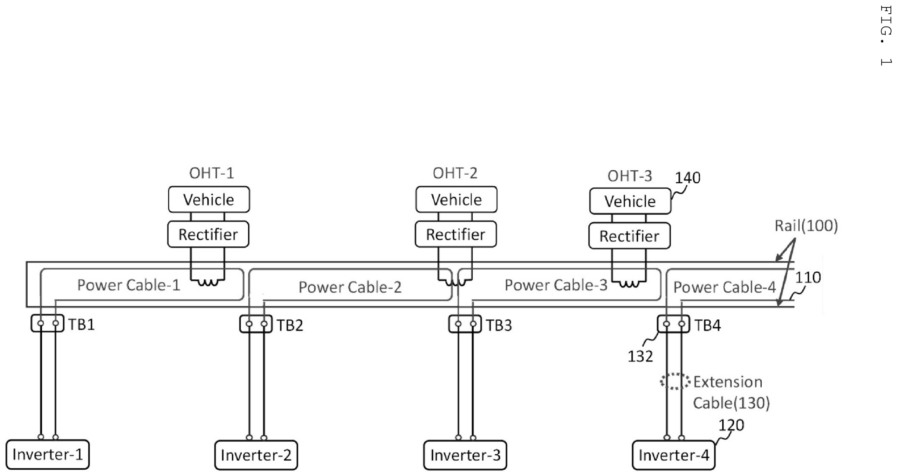

FIG. 1 is a schematic diagram of a conventional wireless power transfer device. Referring to FIG. 1, a plurality of feeder lines 110 configured as closed loops are sequentially installed along a rail 100, and an inverter 120, which supplies high-frequency current to each feeder line 110, is connected via an extension line 130. The extension line 130 is connected to the feeder line 110 via a terminal block 132 and generally includes a non-inductive cable, such as a coaxial cable.

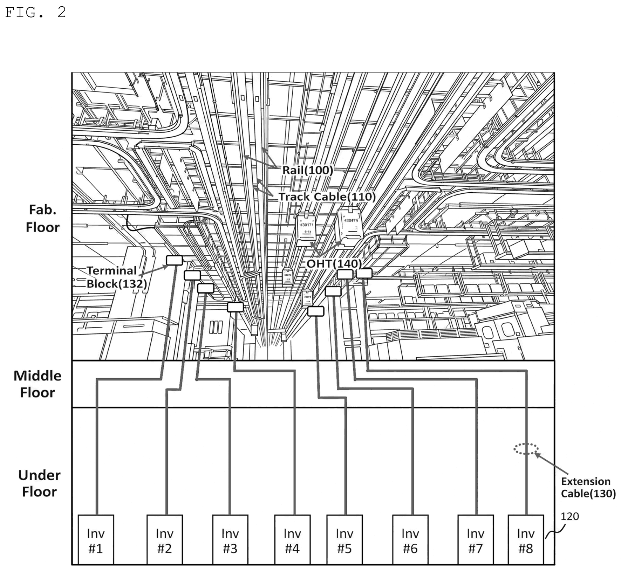

FIG. 2 illustrates a configuration of a semiconductor manufacturing line. The semiconductor manufacturing line generally includes a Fab floor, an intermediate floor, and a lower floor.

The Fab floor, a place in which various process equipment is located and actual semiconductor processes take place, is configured as a high-level cleanroom. On the Fab floor, there is an overhead hoist transfer (OHT) 140, which is logistics equipment for carrying front opening unified pods (FOUPs) containing semiconductor wafers, and rails 100 for the OHT 140 are installed like a spider web on the ceiling of the Fab floor. The OHT 140 is a type of transfer cart. To maintain cleanliness, power is supplied to the OHT 140 by a wireless power transfer device capable of non-contact power transfer. In the wireless power transfer device for OHT, the feeder line 110 configured as a closed loop is installed along the rail 100.

Since cleanrooms are expensive, it is difficult to dispose the inverter 120 within the cleanroom; thus, the inverter 120 is mainly disposed on the lower floor, and the extension line 130 connected to an inverter 120 output goes up to the ceiling of the lower floor via a cable tray or the like, moves horizontally within the intermediate floor, and then goes up to the Fab floor to reach the rail 100 through a duct. The terminal block 132 is generally used to connect the extension line 130 to the feeder line 110 at the rail 100. In this case, there are disadvantages in that, long expensive extension lines must be installed, incidental costs, such as cable trays, cable ducts, and installation labor costs for installing the extension lines are high. In addition, when the inverter 120 or the feeder line 120 fails, the lower floor is not visible from the Fab floor, making after-sales service inconvenient.

Generally, OHT logistics automation equipment includes numerous transfer carts and inverters and a central controller (not shown) that communicates with the transfer carts and inverters, exchanging various data and issuing commands.

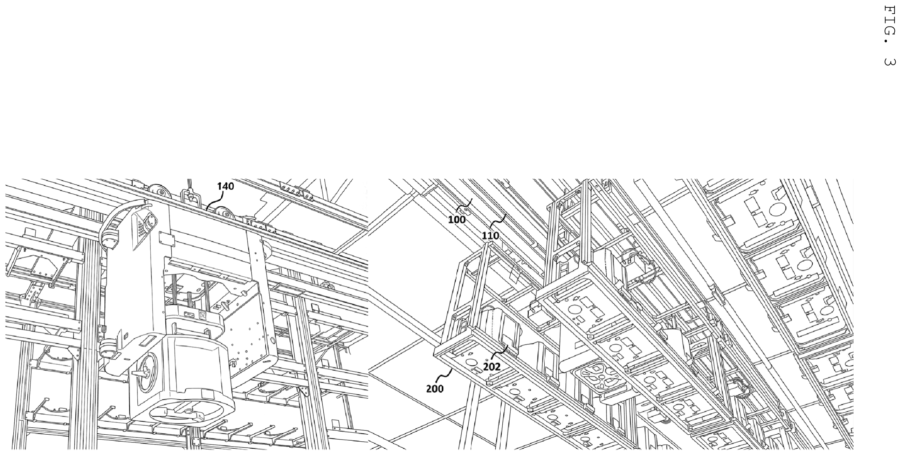

FIG. 3 shows an actual photograph of the OHT 140, a transfer cart used to transfer the FOUPs in a semiconductor manufacturing line, the rail 100 on which the OHT 140 travels, and a side track buffer (STB) 200, which temporarily stores FOUPs 202 on both sides of the rail 100.

The OHT 140 transports FOUPs 202, which store a plurality of wafers, from one processing equipment to another as needed. To increase efficiency, the STB 200 is positioned above the equipment to temporarily store the FOUPs 202 and then rapidly transport them to the processing equipment when required. The present invention aims to provide a novel wireless power transfer device utilizing the OHT 140 and STB 200.

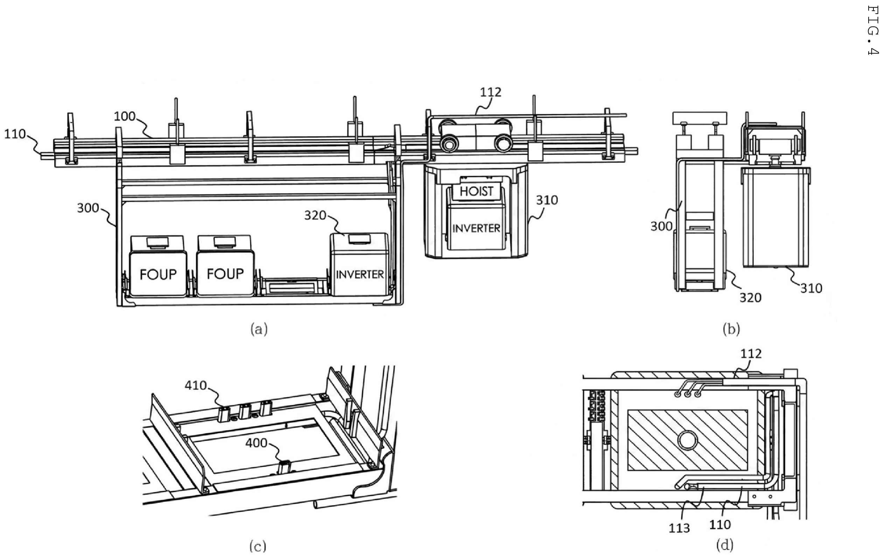

FIG. 4 illustrates a wireless power transfer device according to the present invention, which has a structure in which an inverter 320 is miniaturized and disposed on a side of the OHT rail 100 to be directly connected to the feeder line 110. In this case, since a separate extension line is not required, there is first a significant cost-saving effect. More specifically, referring to FIG. 4, an inverter cradle 300 capable of mounting the inverter 320 is installed on the side of the rail 100, and an input terminal and an output terminal of the inverter 320 are connected to the inverter cradle 300 through a detachable connection unit so that the inverter 320 is detachable from the inverter cradle 300.

Here, the inverter cradle 300 may be implemented by using the STB 200 for storing the existing FOUP 202 on the side of the rail, that is, by connecting the feeder line 110 and an input power cable 112 to a bottom plate of the STB, mounting the inverter 320 thereon, and connecting input and output terminals of the inverter 320 to the inverter cradle 300 via detachable connection unit. Although FIG. 4 only illustrates cradle connection units 400 and 410 implemented on the inverter cradle 300, a corresponding inverter connection unit may be provided on the inverter 320. In addition, a heat-detection wire 113 may be connected to the inverter cradle 300.

Preferably, the inverter cradle 300 is disposed at a position in which both ends of the feeder line closed loop come out from the rail 100 and is spaced apart from the rail 100 by a predetermined distance to avoid physical interference with the transfer cart 310.

In another embodiment, the inverter 320 may be manually replaced by maintenance personnel using a ladder in the event of a failure. In this case, the inverter 320 may be made ultra-compact, making replacement easier.

The wireless power transfer device according to the present invention may utilize a central controller (not shown) included in a logistics system that remotely controls all transfer carts and inverters and monitors various data. For example, if one of the plurality of inverters fails, the central controller may detect the failure and commands a transfer cart to move to the location of the failed inverter, separate the failed inverter from the inverter cradle 300, move the failed inverter to an inverter storage (not shown), remove a novel inverter stored in the inverter storage, and install and connect the novel inverter to the cradle 300, thereby automatically replacing the failed inverter.

Meanwhile, in the present invention, an AS-only transfer cart 310 may be required to replace the inverter 320. This is because, if the inverter 320 fails, power is not supplied to the feeder line 110 connected thereto, making it impossible for the general transfer cart 140 to respond. The AS-only transfer cart 310 has to include its own energy storage device to enable operation without inductive power feed and may require additional structures or functions for inverter replacement. However, if a general transfer cart inherently includes an energy storage device, the transfer card may be used for inverter replacement.

Also, the AS-only transfer cart 310 may be configured with a larger driving unit and frame and higher load strength compared to logistics transfer carts, in order to carry an inverter that is heavier and larger than logistics objects.

Meanwhile, in the present invention, two or more AS-only transfer carts 310 may be provided, so that when a specific inverter fails, the central controller dispatches two AS-only transfer carts simultaneously; one moves empty while the other carries a new inverter, to remove the failed inverter and immediately install the new inverter, thereby minimizing inverter replacement time.

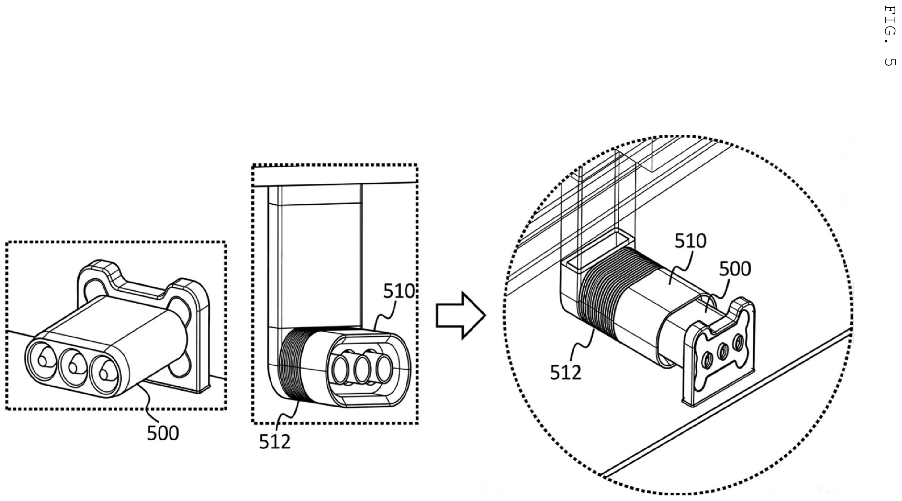

FIG. 5 shows a configuration of a connector as an embodiment of a detachable connection unit. In this case, male and female connectors 500 and 510 are provided on the inverter 320 and the inverter cradle 300, respectively, so that the connector may be fastened by pressure. Since contact force of the male and female connectors 500 and 510 in FIG. 5 may weaken if alignment is inaccurate or if vibration occurs, it is advantageous for at least one of the male and female connectors 500 and 510 to have a connector support 512 formed of a flexible material. Nevertheless, since a risk of overheating and fire exists in the event of poor contact, an overheat sensor (not shown) may be provided on the connector to prevent the risk.

Hereinafter, the connection unit is referred to as a connector. However, the connection unit is not limited to a connector form.

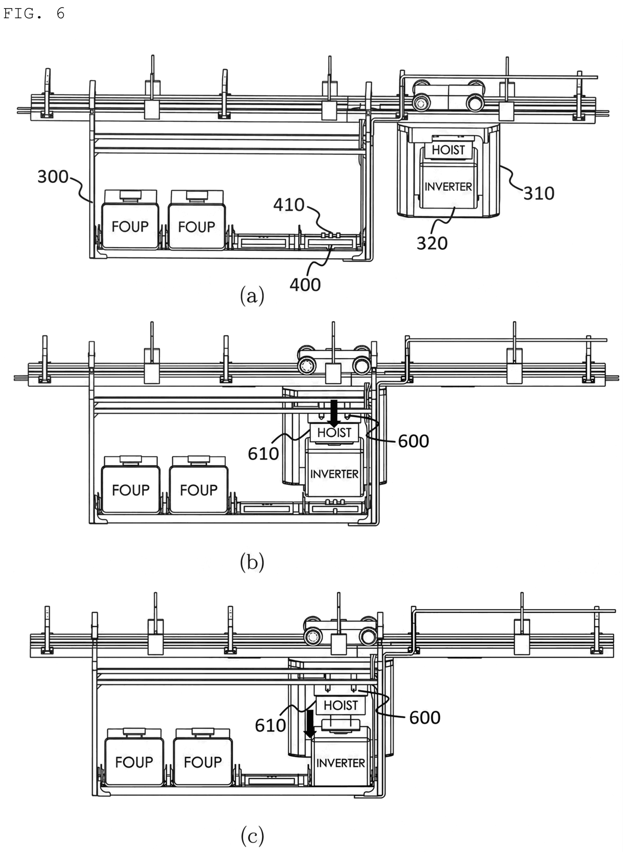

FIG. 6 illustrates an embodiment of an inverter replacement using a side arm and hoist of a transfer cart according to the present invention.

In FIG. 6, a transfer cart for moving existing FOUPs may be used as the AS-only transfer cart 310. Referring to FIG. 6, the AS-only transfer cart 310 moves the inverter 320 to the position of the inverter cradle 300, extends a horizontal arm 600, and lowers the inverter 310 using a hoist 610 to mount the inverter 320. The inverter 320 may be provided with an input connector to receive a single-phase AC input, a three-phase AC input, or a DC input. As for output connectors, two high-frequency AC output connectors for receiving the inverter 320 output are required; however, contact resistance of the connector may increase due to high-frequency current, and thus, two or more connectors may be connected in parallel to form a single connector. Meanwhile, the feeder line 110 may be configured with one turn or two turns, and in the case of a two-turn configuration, at least four output connectors may be required.

In addition, a heat-detection wire for detecting heat generation of the feeder line 110 has to be connected, and since the current is not large, the heat-detection wire may be configured with two small connectors.

Furthermore, a connector for a communication cable to connect the inverter 320 to an external sensor or to communicate with an external device may be added. In this case, the inverter cradle 300 may be provided with a connector that completely corresponds to the connector provided on the inverter 320.

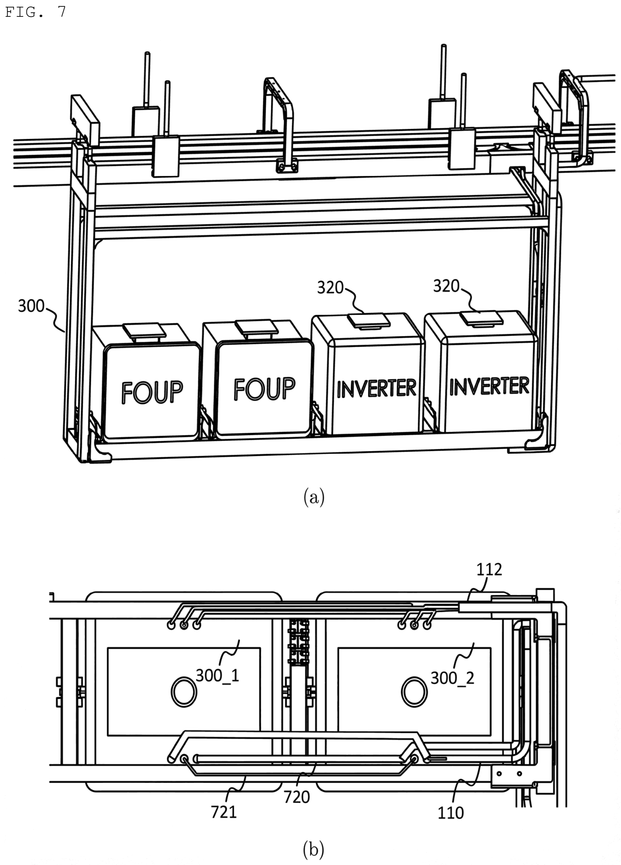

FIG. 7 illustrates another embodiment of an inverter cradle according to the present invention.

The size and weight of the inverter that may be carried by the AS-only transfer cart 310 are inevitably limited, and in this case, it may be difficult to obtain the required inverter capacity even if the inverter capacity is maximized. In this case, the required inverter capacity may be obtained by mounting a plurality of small-capacity inverters 320 on adjacent cradles 300_1 and 300_2 as shown in FIG. 7 and connecting the input and output connectors in parallel through a parallel connection cable 720. Here, the heat-detection wire 721 may also be connected in parallel along with the parallel connection cable 720. In this case, each inverter may share signal lines to synchronize inverter outputs and exchange various data and may further include a separate signal connector (not shown) for this purpose.

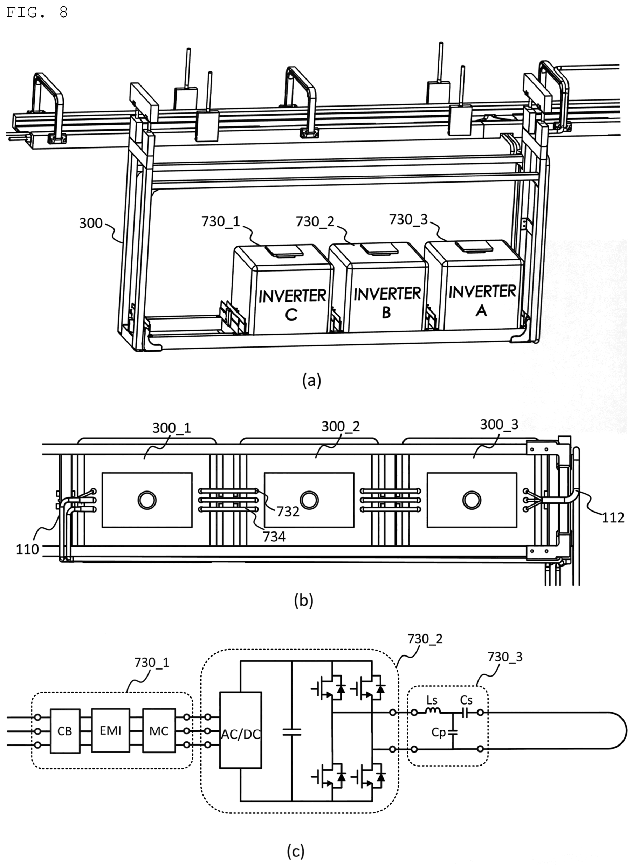

FIG. 8 illustrates another embodiment of an inverter cradle according to the present invention.

Referring to FIG. 8, if it is difficult to obtain the required inverter capacity due to the size or weight limitations of the inverter that may be carried by the AS-only transfer cart 310, one inverter 730 is divided into several modules 730_1, 730_2, and 730_3 as shown in FIG. 8, the respective modules 730_1, 730_2, and 730_3 are provided with input/output connectors and mounted sequentially on adjacent cradles 300_1, 300_2, and 300_3, and the connectors of the respective modules are connected in series to each other on the cradle via a connection cable 732, thereby obtaining the required inverter capacity. Circuit-wise, as shown in FIG. 8(c), the inverter 730 may be divided into an input terminal module 730_1 including an input breaker, an electromagnetic interference (EMI) filter, a fuse, and a switch, a control module 730_2 including a rectifier, an inverter, and a controller, and an output terminal module 730_3 including a resonance unit and a switch. In this case, a signal connector (not shown) and a signal line 734 for exchanging signals between modules may be further included.

In another embodiment, the inverter may be divided into a plurality of modules to satisfy the size and weight limitations, and in this case, the input terminal module 730_1 and the output terminal module 730_3, which have a low probability of failure, may be fixed to the inverter cradle, while only the control module 730_2, which has a high probability of failure, may be configured as a detachable type with a separate connector. In this case, the cradle also has to be provided with a connector corresponding to the control module 730_2. When only the control module is replaced by the transfer cart, a large-capacity inverter may be implemented.

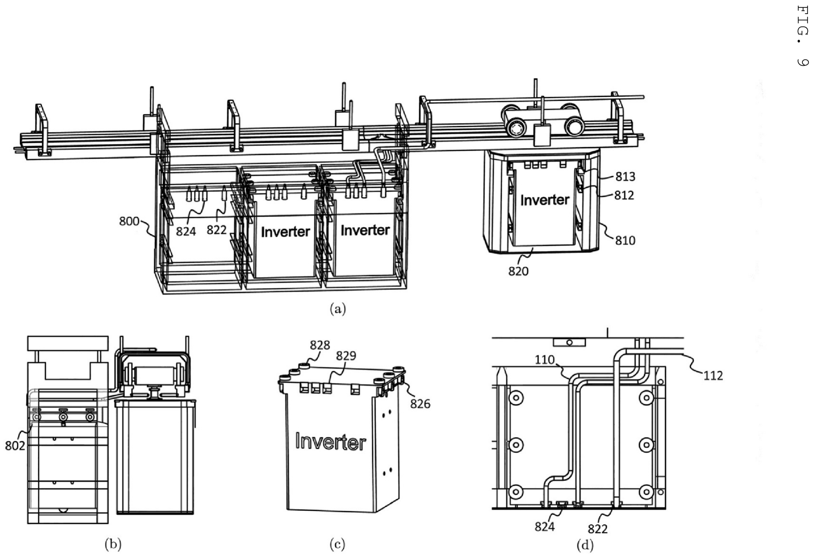

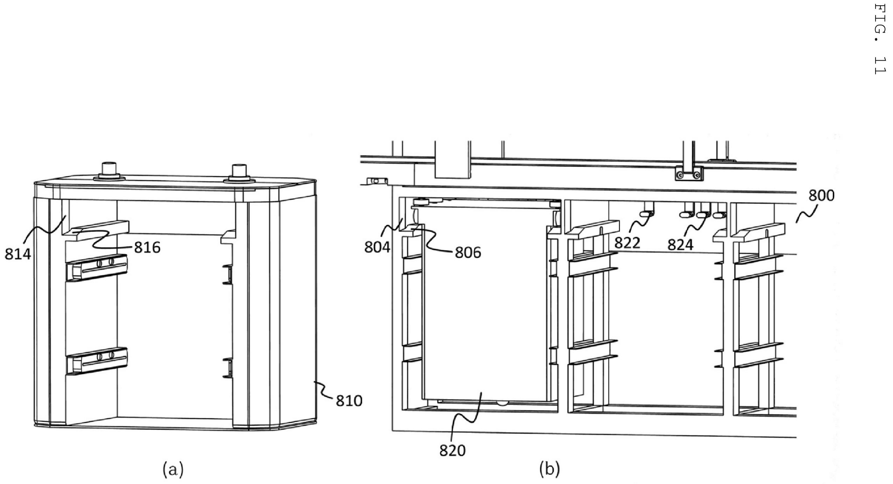

FIGS. 9 to 11 are diagrams illustrating a configuration of a transfer cart and a cradle for horizontally mounting an inverter, as well as a method for horizontally mounting the inverter, according to the present invention.

First, FIG. 9 illustrates a configuration in which, when constructing an AS-only transfer cart 810, the hoist is removed from a transfer cart 810 to accommodate a larger inverter 820, an upper horizontal arm 812, which extends laterally, is rotated to the side of the inverter 820 to grasp both sides of the inverter 820 and extend the arm 812 to maximize an internal space of the transfer cart 810.

To this end, referring to FIGS. 9 to 11, a plurality of rollers 826 and 828 may be provided on both sides of the inverter 820, and roller rails 802 and 813, on which the rollers 826 and 828 may roll, may be provided on both inner sides of the AS-only transport cart 810 and both sides of the cradle 800. Here, the roller rails 802 and 813 may have vertical slopes 804 and 814 and horizontal slopes 806 and 816 to form a wide entrance of the roller rails so that the rollers may roll smoothly even if there is a certain alignment error or more between the AS-only transport cart 810 and the inverter cradle 800.

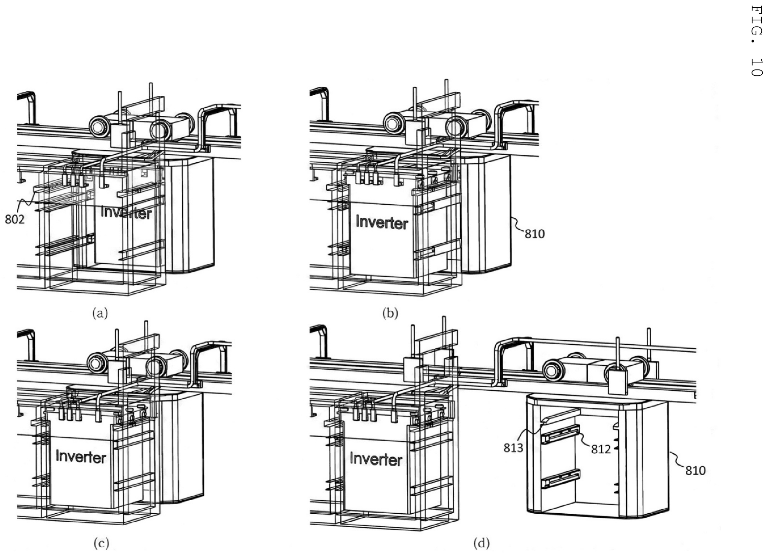

Accordingly, referring to FIG. 10, when the horizontal arms 812 provided on both sides of the AS-only transfer cart 810 push the inverter 820 into the cradle, the inverter 820 may be rolled from the transfer cart 810 into the inverter cradle 800 by the rollers 826 and 828 provided on the inverter 820. In this case, the inverter connector 829 may be provided on the side of the inverter 820, and the corresponding cradle connectors 822 and 824 may be provided on the opposite side of the inverter cradle 800. That is, the horizontal arms 812 push the inverter 820 into the inverter cradle 800, and since there is a connector at the end, the connectors may be fastened by pushing the inverter with greater force at the end.

If the inverter is pushed hard with the horizontal arm 812, the AS-only transfer cart 810 may tilt to a side opposite to the side on which the arms extend. To prevent this, a protrusion (not shown) may be provided in an upper portion of the opposite side from which the arms of AS-only transfer cart 810 extend, to press against the opposite rail, thereby preventing the transfer cart from tilting in the opposite direction.

Meanwhile, the inverter cradle 800 may include a fixing wedge (not shown) to prevent the inverter 820 from rolling out after being mounted.

Furthermore, since there is a risk of the inverter falling even while being held from both sides, the AS-only transfer cart 810 may include a structure to block the bottom of the AS-only transfer cart 810.

In implementing the wireless power transfer device according to the present invention, replacing the inverter while it is still powered may cause sparks or arcs at the connectors, resulting in additional failure or secondary damage. To solve this, the inverter may include an input breaker that may be operated by an external ON/OFF signal, and the AS-only transfer cart may include a unit to provide the ON/OFF signal, and thus, the AS-only transfer cart may turn off the input breaker before separating a failed inverter from the cradle, replace the failed inverter with a new inverter in a state in which the input breaker is in an OFF state, and supply an ON signal to the input breaker after replacement to turn on the input breaker to start the new inverter.

The AS-only transfer cart may send the ON/OFF signal to the breaker of the inverter using infrared, Zigbee, or ultrasonic waves.

In addition, in a case in which two inverters are configured on adjacent inverter cradles to drive two feeder lines adjacent to the rail 100, a failover unit (not shown) may be added to the cradle adjacent to the two inverters, so that if one inverter fails, the other inverter may drive the feeder line connected to the failed one. The failover unit includes a switch box capable of implementing this. The failover unit is connected to output terminals of the two inverters through a connector, and an output of the failover unit is connected to the two feeder lines.

In this case, even if one inverter fails, the feeder lines continue to operate without interruption, thereby enabling uninterrupted operation and automatically replacing the failed inverter. In this case, the transfer device does not require a separate energy storage device.

In the overall logistics system including the wireless power transfer device according to the present invention, if one of the inverters fails and power is cut off to a specific section of the feeder line, all transfer carts entering this section will stop, and it may be difficult for a AS-only transfer cart to enter this section, and therefore, the central controller may store information on the feeder track supplied by each inverter, and if a specific inverter fails, the central controller may issue a command to all moving vehicles not to enter the feeder track connected to the failed inverter.

Although various embodiments of the present invention have been described using specific terms, the specification and drawings are to be regarded in an illustrative rather than a restrictive sense in order to help understand the present invention. It is obvious to those skilled in the art that various modifications and changes may be made without departing from the broader spirit and scope of the invention.

### [Description of Reference Numerals]

| | | | |
|---|---|---|---|
| 100: | Rail | 110: | feeder line |
| 112: | Input power cable | 113: | heat-detection wire |
| 120, 320, 730, 820: | Inverter | 130: | extension line |
| 132: | terminal block | 140: | transfer cart |
| 200: | STB | 202: | FOUP |
| 300, 800: | Inverter cradle | 310, 810: | AS-only transfer cart |
| 300_1, 300_2, 300_3: | separated inverter cradle group | | |
| 400, 410, 822, 824: | cradle connector | | |
| 500: | female connector | 510: | male connector |
| 512: | support | | |
| 600, 812: | horizontal arm | 610: | hoist |
| 720: | parallel connection cable | 721: | parallel connection heat-detection wire |
| 730_1: | input terminal module | 730_2: | control module |
| 730_3: | output terminal module | 732: | connection cable |
| 734: | signal Line | | |
| 802, 813: | roller rail | 804, 814: | vertical slope |
| 806, 816: | horizontal slope | 826: | vertical roller |
| 828: | guide roller | 829: | inverter connector |

## Claims

1. A wireless power transfer device for transferring power to a plurality of transfer carts moving along a rail by magnetic induction in a non-contact manner, the wireless power transfer device comprising:
a feeder line installed along the rail and configured as a closed loop;
a feeder track configured such that a plurality of feeder loops are sequentially installed along the rail;
an inverter supplying AC current to each of the feeder lines;
an inverter cradle provided on a side of the rail for mounting the inverter;
the feeder line being connected to the inverter cradle and the inverter being mounted on the inverter cradle and
a plurality of connection units connecting input and output terminals of the inverter to the inverter cradle so that the inverter is detachable;
a transfer cart for replacing the inverter; and
a central controller remotely controlling the entire transfer cart and the entire inverter and monitoring various data,
wherein, when one of the plurality of inverters fails, the central controller detects the failure and commands the transfer cart to move to a position of the failed inverter, to detach the failed inverter from the inverter cradle and move the failed inverter to an inverter storage, and to install a new inverter stored in an inverter storage onto the inverter cradle of the failed inverter and connect a connection unit, thereby automatically replacing the failed inverter with the new inverter.

2. The wireless power transfer device of claim 1, wherein the transfer cart for replacing the inverter is an AS-only transfer cart including an internal energy storage device to enable operation for a predetermined time even without an inductive power feed, unlike a logistics transfer cart.

3. The wireless power transfer device of claim 1, wherein the inverter cradle is disposed at a position at which both ends of a closed loop of the feeder line come out of the rail, and is spaced apart from the rail by a predetermined distance to avoid physical interference with the transfer cart.

4. The wireless power transfer device of claim 1, wherein the connection unit is configured in the form of a connector, and a plurality of connectors provided on the inverter and a plurality of connectors provided on the inverter cradle are configured to be fastened to each other and separated from each other.

5. The wireless power transfer device of claim 1, wherein
the inverter includes the connection unit on a lower side thereof,
the inverter cradle includes a connection unit corresponding to the connection unit of the inverter, and
the transfer cart includes a horizontal movement arm extending laterally and a hoist, so that, when the transfer cart lifts and moves the inverter with the hoist and mounts the inverter on the inverter cradle, the transfer cart extends the horizontal movement arm laterally to send the inverter onto the inverter cradle, and then lowers the inverter on the inverter cradle using the hoist, thereby fastening the connection unit.

6. The wireless power transfer device of claim 1, wherein
the inverter includes the connection unit on a side thereof, the inverter cradle includes a connection unit corresponding to the connection unit of the inverter, and
the transfer cart includes an arm extending laterally, to move the inverter and push the inverter laterally to the inverter cradle.

7. The wireless power transfer device of claim 6, wherein
the transfer cart includes a roller rail on both internal sides thereof,
the inverter includes a vertical roller and a guide roller configured to roll on the roller rail on both sides of the inverter, and
the inverter cradle includes a roller rail corresponding to the vertical roller and the guide roller of the inverter, such that the inverter is configured to smoothly roll from the transfer cart into the inverter cradle.

8. The wireless power transfer device of claim 7, wherein the roller rail provided on the transfer cart and the inverter cradle includes a vertical slope and a horizontal slope to form a wide entrance of the roller rail, such that the roller is able to smoothly enter the roller rail even when there is a certain alignment error or more between the transfer cart and the inverter cradle.

9. The wireless power transfer device of claim 7, wherein the inverter cradle includes a fixing wedge to fix the inverter and prevent the inverter from rolling out after the inverter is mounted on the inverter cradle.

10. The wireless power transfer device of claim 4, wherein at least one of male and female connectors includes a connector support formed of a flexible material to prevent a reduction in contact force of the connector of the inverter or the connector of the cradle caused by vibration or misalignment between the male and female connectors after coupling.

11. The wireless power transfer device of claim 1, wherein the connection unit includes an overheat detection sensor to break the inverter when overheating occurs due to poor contact.

12. The wireless power transfer device of claim 1, wherein the inverter is configured as a small-capacity inverter within a size and weight limit transportable by the transfer cart, and a plurality of the small-capacity inverters are mounted on a plurality of the inverter cradles, and inputs and outputs of the plurality of small-capacity inverters are connected in parallel to each other within the plurality of inverter cradles to obtain a required capacity.

13. The wireless power transfer device of claim 1, wherein the inverter is divided into a plurality of modules to satisfy a size or weight limit transportable by the transfer cart, each of the plurality of modules includes the connection unit at an input terminal and an output terminal thereof, and a plurality of the inverter cradles having connection units respectively corresponding to the modules are configured, so that the plurality of modules are sequentially mounted and are connected within the plurality of inverter cradles to constitute an inverter having a large capacity.

14. The wireless power transfer device of claim 1, wherein the inverter is divided into a plurality of modules to satisfy a size or weight limit transportable by the transfer cart, in which an input terminal module including an input breaker, an electromagnetic interference (EMI) filter, a magnetic contactor (MC), and a fuse, which have a low failure probability, and an output terminal module including a resonance circuit and various sensors are fixed to the inverter cradle and only a control module including a rectifier, an inverter, and a controller, which have a high failure probability, is provided with a separate connection unit, and the inverter cradle is provided with a corresponding connection unit, such that only the control module is replaced by the transfer cart.

15. The wireless power transfer device of claim 1, wherein
the inverter includes an input breaker operable by providing an ON/OFF signal from the outside, and
the transfer cart includes a unit for providing the ON/OFF signal to the input breaker,
wherein the transfer cart turns off, before separating a failed inverter from the inverter cradle, the input breaker and separates the failed inverter, and when replacing the failed inverter with a new inverter, the transfer cart replaces the failed inverter with the new inverter in a state in which the input breaker is in an OFF state, and after replacement, the transfer cart provides an ON signal to the input breaker to turn on the input breaker to operate the new inverter.

16. The wireless power transfer device of claim 15, wherein the transfer cart provides the ON/OFF signal to the input breaker of the inverter using a unit including an infrared, Zigbee, and ultrasonic waves.

17. The wireless power transfer device of claim 1, wherein two inverters are mounted on the inverter cradle to drive two adjacent feeder lines, and a fail-over unit is added to be connected to output terminals of the two inverters so that, if one of the inverters fails, the other inverter is able to drive the feeder line connected to the failed inverter.

18. The wireless power transfer device of claim 1, wherein the central controller stores information on a feeder track supplied by each inverter, and in response to a failure of a specific inverter, the central controller issues a command to all of the moving vehicles not to enter the feeder track connected to the failed inverter.
